# EUROPEAN PATENT SPECIFICATION

(11) **EP 2 119 136 B1**
(45) Date of publication and mention of the grant of the patent: **08.09.2010**
(21) Application number: 07710884.3
(22) Date of filing: 09.02.2007
(51) Int. Cl.: H04L 12/56, H04M 3/51, H04Q 3/64

(54) **SYSTEM AND METHOD FOR MONITORING AGENTS' PERFORMANCE IN A CALL CENTER**
SYSTEM UND VERFAHREN ZUR ÜBERWACHUNG DER LEISTUNG VON CALL-CENTER-AGENTEN
SYSTÈME ET PROCÉDÉ DE SURVEILLANCE DU RENDEMENT DES AGENTS D'UN CENTRE D'APPELS

(43) Date of publication of application: 18.11.2009
(73) Proprietor: Huawei Technologies Co., Ltd., Longgang District, Shenzhen Guangdong 518129 (CN)
(72) Inventor: LI, Hang, Shenzhen, Guangdong 518129 (CN); MO, Xiaojun, Shenzhen, Guangdong 518129 (CN); WU, Yanyu, Shenzhen, Guangdong 518129 (CN); SANG, Tao, Shenzhen, Guangdong 518129 (CN); SU, Yu, Shenzhen, Guangdong 518129 (CN)
(74) Representative: Barth, Stephan Manuel
(86) International application number: PCT/CN2007/000454
(87) International publication number: WO 2008/098408

(56) References cited:
- WO-A2-02/23434
- CN-A- 1 722 657
- US-B1- 6 721 416

## Description

### Field of the Invention

The present invention relates in general to telecommunication technologies, more particularly, to a system and method for monitoring agents' performance in a call center.

### Background of the Invention

A call center helps an enterprise to integrate customer resources, customer services, marketing, and customer relations management. Moreover, a call center helps an enterprise to maintain an edge over its competitors by providing various customer related services in the highly competitive business environment. A well-operated call center increases the efficiency of a business operation, enhances customer relations, and boosts the market shares of the company.

Online monitoring is one of the essential functions of a call center. By means of online monitoring, the management observes how a customer service agent interfaces with customers and uses the information gathered from online monitoring for performance reviews.

Online monitoring can involve voice recording. A company could provide voice recording as a value-added service. In a call center, the management can choose to monitor and record customer service agents' performance. Online monitoring enables the management to evaluate the quality of services provided by its agents through voice recording. In a conventional call center equipped with narrowband communication equipment, monitoring and recording functions are performed by means of wire-tapping or multi-party conferencing.

As the telecommunications industry moves toward an Internet Protocol (IP) based communications system, there are necessary changes to the equipments used in a call center. Generally speaking, these changes include a new system for monitoring and recording conversations between customer service agents and customers in real time.

What is desired is an improved system and method for monitoring and recording customer service agents' performance in a call center equipped with broadband communication equipment. US patent 6721416B1 discloses a method and system for providing dialogue suggestions to an agent during an agent caller interaction. A method of interaction in a voice response application comprising: receiving a voice signal in a call center; identifying whether the caller or a called center agent is the originator of the voice signal; converting the voice signal into computer readable text; identifying a key word such as a confrontational phrase (e.g. "what are you talking about" in the computer readable text); and providing a different suggestion depending on the originator is the call agent or the caller. For instance, a suggestion if the age made the confrontational phrase next time would be to use a less confrontational phrase such as "can you explain that again". A suggestion if the called made the confrontational phrase would be countered with a "I'll try to explain that better". WO0223434A2 discloses a monitoring system provides a service for users to monitor their respective Web sites, or other server systems (30), as seen from the computing devices (34) of other users. In a preferred embodiment, the system includes an agent component (32) that runs on the computing devices (34) of service users to provide functionality for accessing and monitoring the performance of a server (30) - preferably when such devices are otherwise idle. By running the agent component (32) on a computer (34), a user effectively makes that computer (34) available to others for use as a monitoring agent. Processing resources for conducting monitoring sessions are thus contributed and shared by members of a community; The agents (32, 34) are remotely configurable over the Internet, and may be configured, for example, to execute a particular Web transaction while monitoring specified performance parameters (server response times, network hop delays, server availability, etc). Using a service provider Web site, a user of the service can set up a monitoring session in which agent devices (34) of other community members are used to monitor the performance of the user's server system (30). In one embodiment, the system implements a reciprocity policy in which the extent to which a user may use the service for monitoring is dependent upon the quantity of processing resources (e.g., transaction execution events) that user has contributed to the community. Performance data collected by the agents (32, 34) may be used both to generate server-specific reports and general Internet "weather maps". CN1722657A discloses that in a network system for communication between a first terminal with an encrypting function and a second terminal without the encrypting function, a control data transmission device includes a receiving unit receiving control data sent from the first terminal to the second terminal, a data processing unit for extracting cipher information of the first terminal from the control data, a memory storing the cipher information of the first terminal, and a sending unit for sending the control data without the cipher information toward the second terminal, or sending to the first terminal the control data with the cipher information, and further sending the cipher information to the user data transmission device; a user data transmission device includes an encryption processing unit for decrypting the data that was sent from the first terminal to the second terminal while encrypting the data as sent from the second terminal to the first terminal.

### Summary of the Invention

The construction and method of operation of the invention, however, together with additional objects and advantages thereof, will be best understood from the following description of specific embodiments when read in connection with the accompanying drawings.

The present invention discloses a system and method for monitoring customer service agents' performance according to the interaction with one or more customers in a call center. The system comprises a call control server, a management console, and an agent console. The management console sends the call control server a first request, carrying a predetermined tag, to initiate a monitoring session, thereby triggering the call control server to send the agent console a second request, carrying the predetermined tag, to establish the monitoring session with the management console, wherein the monitoring session is set up without being detected by an operating agent, wherein during the monitoring session the agent console forwards a copy of data streams, related to the activities of the agent and one or more customers, to the management console.

### Brief Description of the Drawings

The drawings accompanying and forming part of this specification are included to depict certain aspects of the invention. The invention may be better understood by reference to one or more of these drawings in combination with the description presented herein. It should be noted that the features illustrated in the drawings are not necessarily drawn to scale.

FIG. 1 is a diagram illustrating a call center equipped with a narrowband communications system including a wire-tapping system in the prior art.

FIG. 2 is a diagram illustrating a call center equipped with a broadband communications system including a multi-line conferencing system in the prior art.

FIG. 3 is a diagram illustrating a call center equipped with a broadband communications system including an Ethernet switch with the port-mirroring function in the prior art.

FIG. 4A is a diagram illustrating a call center equipped with a broadband communications system according to an embodiment of the present invention.

FIG. 4B is a diagram illustrating a call center equipped with a broadband communications system according to another embodiment of the present invention.

FIG. 5 is a flow diagram illustrating the process of setting up a recording session between an agent console and a management console based on the SIP protocol according to an embodiment of the present invention.

FIG. 6A is a diagram illustrating a call center 600 equipped with a broadband communications system according to an embodiment of the present invention.

FIG. 6B is a diagram illustrating a call center 600 equipped with a broadband communications system according to another embodiment of the present invention.

### Detailed Description of the Embodiments

The following detailed description of the invention refers to the accompanying drawings. The following detailed description does not limit the invention. Instead, the scope of the invention is defined by the appended claims.

A system disclosed in the present invention provides monitoring and recording functions for a call center equipped with broadband communication equipment, which provides a solution to the disadvantages of conventional systems identified in the background section.

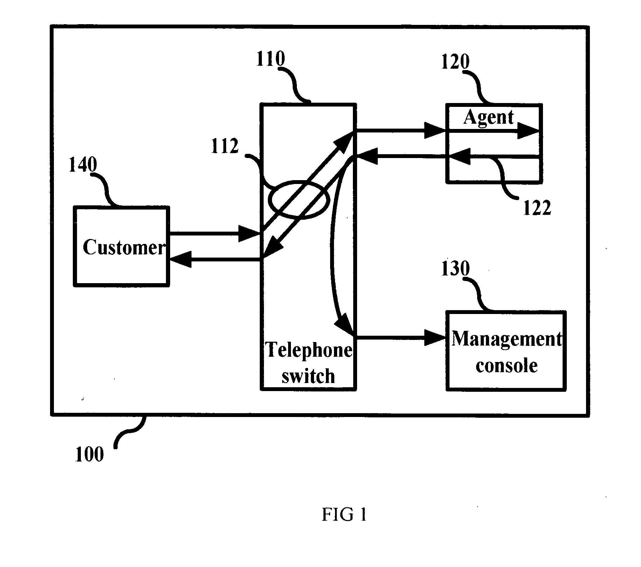

FIG. 1 is a diagram illustrating a call center equipped with a narrowband communications system including a wire-tapping system in the prior art.

In a telephone switching system 110 included by the call center 100, multiple time slots, carrying a conversation between a customer service agent (agent) and a customer, are switched. The telephone switching system 110 establishes a two-way voice channel 112 between an agent console 120 and a customer console 140. Specifically, through predetermined transmitting time slots and receiving time slots, voice signals between the agent and the customer are transmitted and received respectfully.

The agent console 120 functions as a regular telephone. The agent console 120 picks up the voice of an agent by the microphone and converts the voice into voice signals, which are subsequently sent in the transmitting time slots. The agent console 120 also converts a customer's voice signals received in the receiving time slots into a voice, which is subsequently sent to the agent.

A management console 130 taps into the transmitting time slots of a customer service agent for monitoring the conversation between the agent and the customer. In order to wiretap, the customer's voice signal is fed into the agent's transmitting time slots 122. As a result, there might be echoes generated by the acoustics or the 2-wire to 4-wire -line conversion in the agent console.

The management console 130 receives a copy of voice signals carried in the transmitting time slots of the agent console. As a result, someone from the management, such as a manager or a team leader, can monitor the conversation between an agent and a customer. If a recording device is used, the conversation between the agent and the customer may be recorded.

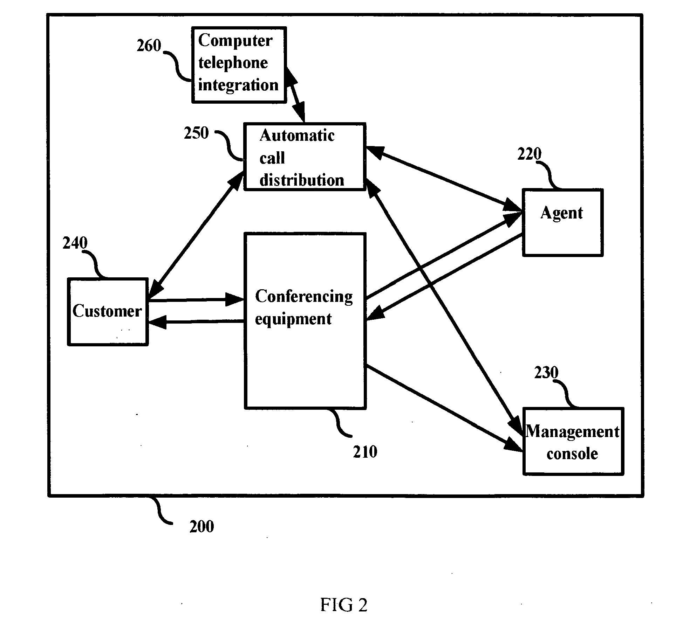

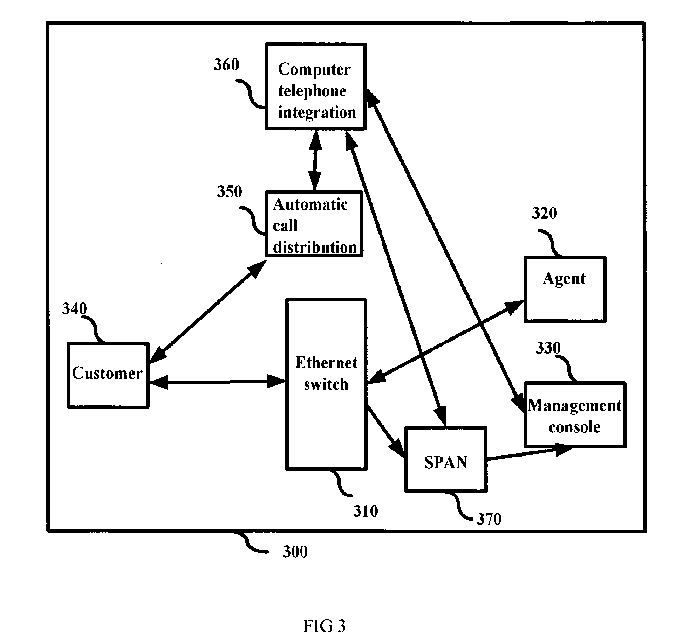

In a call center equipped with broadband communications equipment, the voice is converted into data steams and the IP protocol is used to exchange data streams. Therefore, a wire-tapping technique, as shown in FIG. 1, cannot be used. Instead, multi-line conferencing, as shown in FIG 2, or the port-mirroring function of an Ethernet switch, as shown in FIG. 3, is used to monitor and record the conversation between an agent and a customer.

FIG. 2 is a diagram illustrating a call center 200 equipped with a broadband communications system including a multi-line conferencing system 210 in the prior art. For example, the system includes a Soft Automatic Call Distribution (ACD) server 250 and a computer telephone integration (CTI) server 260. The Soft ACD server 250 and CTI server 260 together enables a computer to accept calls and to route them to appropriate terminals.

After a conferencing session is set up, an agent console 220, a management console 230, and a customer console 240 join a conference call via IP conferencing equipment 210. In other words, the three consoles are connected to the IP conferencing equipment via a broadband network.

The communication channel between the agent console 220 and the customer console 240 is bidirectional while that between the agent console 220 and the management console 230 is unidirectional. The IP conferencing equipment 210 forwards the data streams exchanged between the agent and the customer, to the management console 230, thereby monitoring the conversation between the agent and the customer. If a recording device is used, the conversation is recorded.

A conventional conferencing system, such as the one shown in FIG. 2, has a number of disadvantages.

Firstly, it is more costly due to the requirement of dedicated IP conferencing equipment.

Secondly, in most cases, the conversation between an agent and a customer has already started when someone from the management initiates the monitoring of their conversation. The monitoring process tears down an existing communication session between an agent and a customer before it establishes a conferencing session for the agent, the customer, and the management. The interruption of an existing communication session results in an unpleasant experience for the customer.

Lastly, all conversation sessions are routed through the IP conferencing equipment, which is not scalable to support a large amount of activities.

FIG. 3 is a diagram illustrating a call center 300 equipped with broadband communications system including an Ethernet switch 310 with the port-mirroring function in the prior art.

The system includes a Soft Automatic Call Distribution (Soft ACD) server 350 and a computer telephone integration (CTI) server 360. A communication session is established between an agent console 320 and a customer console 340 via an Ethernet switch 310. The agent console 320 and the customer console 340 are connected to a mirrored port on the Ethernet switch 310.

A Switched Port Analyzer (SPAN) 370 is connected to a mirroring port on the Ethernet switch 310. The Ethernet switch forwards copies of data traffic between the agent console 320 and the customer console 340 from the mirrored ports to the mirroring port. The SPAN 370 analyzes the data collected from the mirroring port.

The SPAN 370 filters and processes the collected data traffic and separates the data streams between the agent and the customer from other data traffic. The data streams between the agent and the customer are forwarded to the management console 330, which subsequently monitors the conversation between the agent and the customer. The data streams between the agent and the customer can be saved to a file, and thus the conversation is recorded.

There are a number of disadvantages of the system, as shown in FIG. 3.

Firstly, it requires a dedicated SPAN to filter and process the data collected from the mirroring port.

Secondly, it requires an Ethernet switch that supports the mirroring function.

Thirdly, to initiate the recording function, the control port of the CTI server must be configured in such a way that it could analyze the data streams from and/or to a specific IP address.

Lastly, the SPAN must be configured directly or via the CTI server to forward the conversation between the agent and the customer to the management console. In general, a CTI server does not have information about the dynamic IP address assigned to an agent console. As a result, each agent console needs to be assigned with a static IP address. The SPAN or the CTI server must be configured in such a way that the system retains the information about the IP address assigned to each agent console as well as the agents assigned to each agent console.

Because all agent consoles must be connected to a centralized Ethernet switch, it is very difficult to support other types of agent consoles and keep track of the assignment of the agent consoles. The Ethernet switch becomes the bottleneck of the system because all the traffic is routed through it.

In summary, a conventional system for monitoring and recording agents' performance has the following disadvantages.

Firstly, a conventional system requires some special equipment, such as an IP conferencing equipment, port-mirroring capable Ethernet switches, and/or SPANS.

Secondly, whenever someone from the management initiates the monitoring function, the broadband communication system needs to tear down an existing communication session and establishes a new conferencing session. The monitoring process interrupts an established conversation session between an agent and a customer, which leads to an unpleasant experience for the customer because both the agent and the customer are fully aware that they are being monitored.

Thirdly, the CTI server or the SPAN needs to be configured in order to support the monitoring function.

Lastly, each agent console needs to be assigned with a static IP address and the system needs to retain the information about the IP address of each agent console as well as the agents assigned to each agent console.

An embodiment of the present invention discloses a system and method for monitoring and recording customer service agents' performance in a call center equipped with broadband communication equipment.

To initiate a monitoring session, a management console establishes a connection with an agent console by issuing a session setup request command, which carries a predetermined tag, to a SoftCAD server. The predetermined tag, which is a text string representing the type of a call or the attribute of a call, indicates that a request for a monitoring session is issued. The agent console sets up a monitoring session accordingly.

Specifically, the session setup request command can be sent based on the Session Initiation Protocol (SIP) or other interactive protocols, such as H.323, MGCP, and H.248. The process of setting up the monitoring session should follow the specification of the protocol used in the system.

The agent console receives and recognizes the session setup request command, and the monitoring session for the management console is set up without being detected by an operating agent. The data streams between the agent console and a customer console are copied and forwarded to the management console.

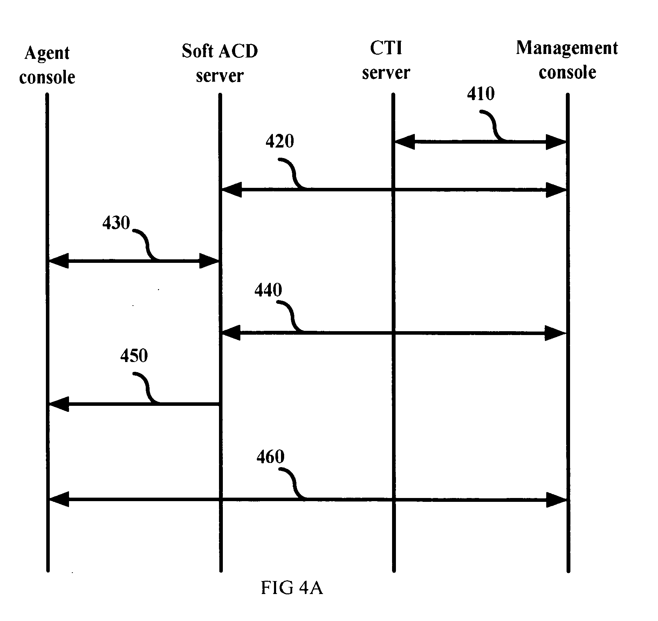

FIG. 4A is a diagram illustrating a call center equipped with a broadband communications system according to an embodiment of the present invention. The process of setting up a monitoring session between an agent console and a management console is based on the SIP protocol.

In step 410, the management console sends a CTI server a request to set up a monitoring session. The request includes the information about the agent console that is gonging to be monitored. The CTI server looks up the uniform resource identifier (URI) of the agent console, and returns the information to the management console.

In step 420, the management console sends a session setup request command to a Soft ACD server. The request carries a predetermined tag indicating that a request for a monitoring session is issued.

In step 430, the Soft ACD server sends a session setup request command to the agent console. The agent console receives and recognizes the session setup request command, and a monitoring session for the management console is set up without being detected by an operating agent.

In step 440, the Soft ACD server and the management console send each other an acknowledgement to acknowledge the completion of the session setup process.

In step 450, the Soft ACD server sends an acknowledgement to the agent console to complete the session setup process.

In step 460, data streams carrying the conversation between the agent console and the customer console are copied and sent to the management console via a multimedia channel.

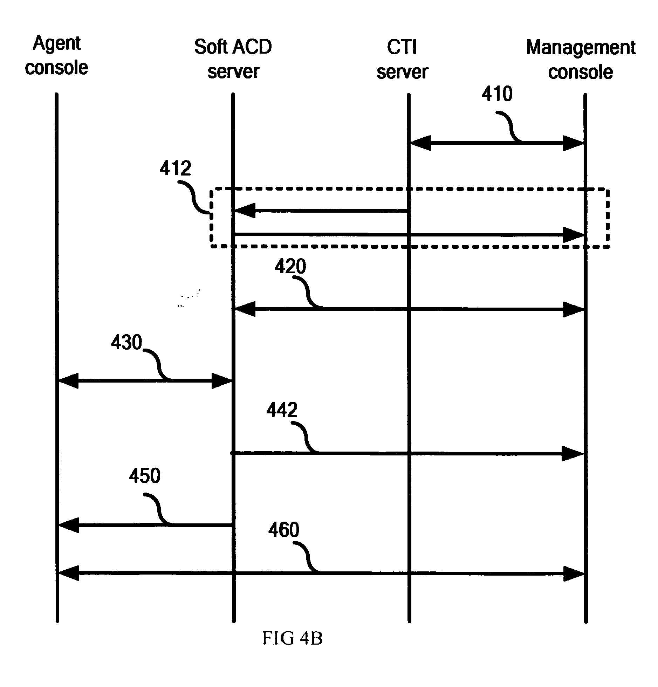

FIG. 4B is a diagram illustrating a call center equipped with a broadband communications system according to another embodiment of the present invention. The process of setting up a monitoring session between an agent console and a management console is based on the SIP protocol.

Step 410 in FIG. 4B is the same as that in FIG. 4A. In step 412, the CTI server sends a monitoring request to the Soft ACD server, wherein the Soft ACD server sends an INVITE message to the management console.

Steps 420 and 430 in FIG. 4B are the same as those in FIG. 4A. In step 442, the Soft ACD server sends an acknowledgement to the management console to complete the session setup process.

Steps 450 and 460 in FIG. 4B are the same as those in FIG. 4A. The data streams carrying the conversation between the agent console and the customer console are copied and sent to the management console via a multimedia channel.

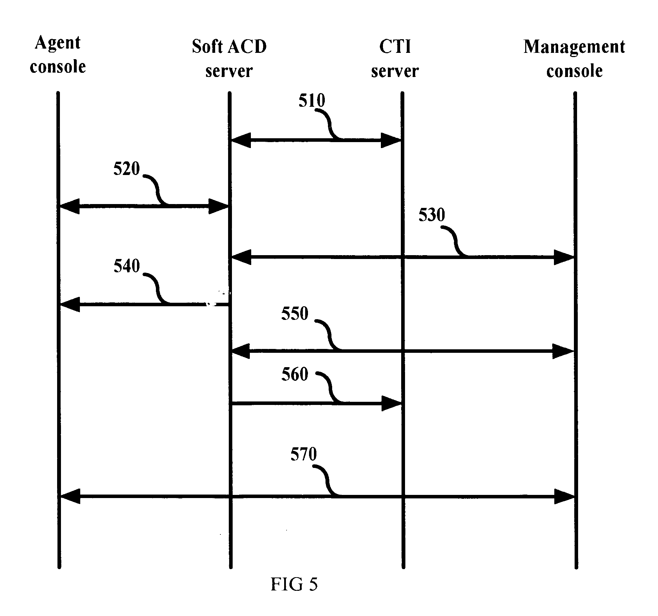

FIG. 5 is a flow diagram illustrating the process of setting up a recording session between an agent console and a management console based on the SIP protocol according to an embodiment of the present invention. The communication protocol between the recording server and the Soft ACD server is MGCP.

In step 510, the CTI server sends a start-recording request to the Soft ACD server. The request is triggered by a request from either a management console or a predetermined configuration.

In step 520, the Soft ACD server sends a session setup request command to the agent console. The agent console receives and recognizes the session set up request command, and a monitoring session for the management console is set up without being detected by the operating agent.

In step 530, the Soft ACD server establishes a recording session with a recording server, wherein the recording server can be called a management console as disclosed in the Figure 5. The session setup messages are exchanged via CRCX interactive commands in the MGCP protocol.

In step 540, the Soft ACD server sends an acknowledgement to the agent console to complete the session setup process. In step 550, the Soft ACD server requests the recording server to start to record the conversation between the agent console and the customer console.

In step 560, the Soft ACD server sends an acknowledgement to the CTI server to complete the session setup process. In step 570, the data streams carrying the conversation between the agent console and the customer console are copied and sent to the recording server via a multimedia channel.

The following message is an example of an SIP INVITE command that carries a predetermined tag: INVITE sip:28780808@10.11.9.25:5060;type=monitor SIP/2.0. The parameter "type=monitor" carried in the message instructs the agent console to set up a monitoring session without informing the consoles (the agent console and the customer console) which has set up the session.

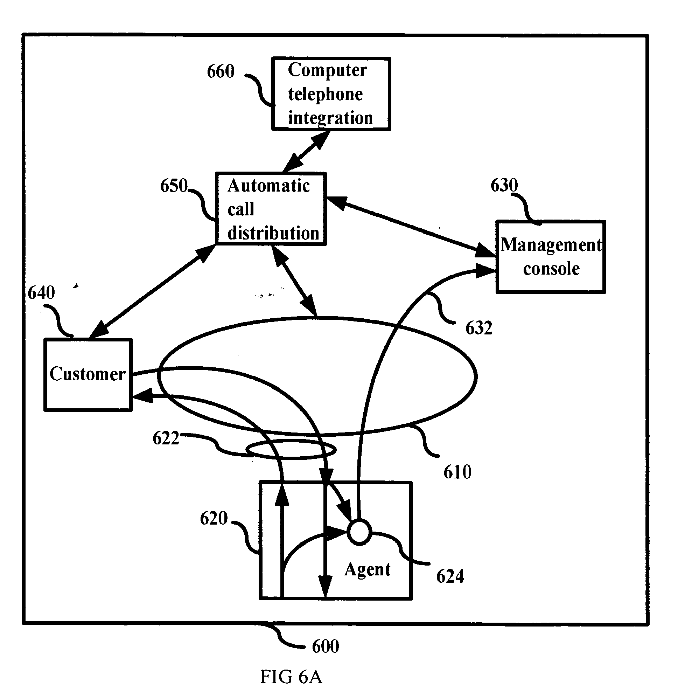

FIG. 6A is a diagram illustrating a call center 600 equipped with a broadband communications system according to an embodiment of the present invention. The system includes a Soft ACD server 650 and a CTI server 660.

A communication session is established between an agent console 620 and a customer console 640 via an IP network 610, which provides a bidirectional communication channel 622.

A management console 630 sends the CTI server 660 a session setup request command to register the request for a monitoring session. Once the request is granted, the management console 630 sends the Soft ACD server 650 a session setup request command with a predetermined tag to initiate the monitoring session.

After receiving the request, the Soft ACD server 650 sends the agent console 620 a session setup command to establish the monitoring session. The command sent by the Soft ACD server 650 carries the predetermined tag, indicating that a request for a monitoring session is issued.

The agent console 620 receives and recognizes the session setup command, and the monitoring session for the management console 630 is set up without being detected by an operating agent.

In the monitoring session, the agent console 620 and the management console 640 communicate via a unidirectional communication channel 632, from the agent console 620 to the management console 630.

While the agent and the customer are engaged in their conversation, the agent console 620 combines the data streams from the agent with those from the customer console 640 at a mixer 624 and forwards the combined data streams to the management console 630. By monitoring the combined data streams, someone from the management can evaluate the agent's performance. The same system can be used to record the communication session by simply routing the combined data streams to a recording device.

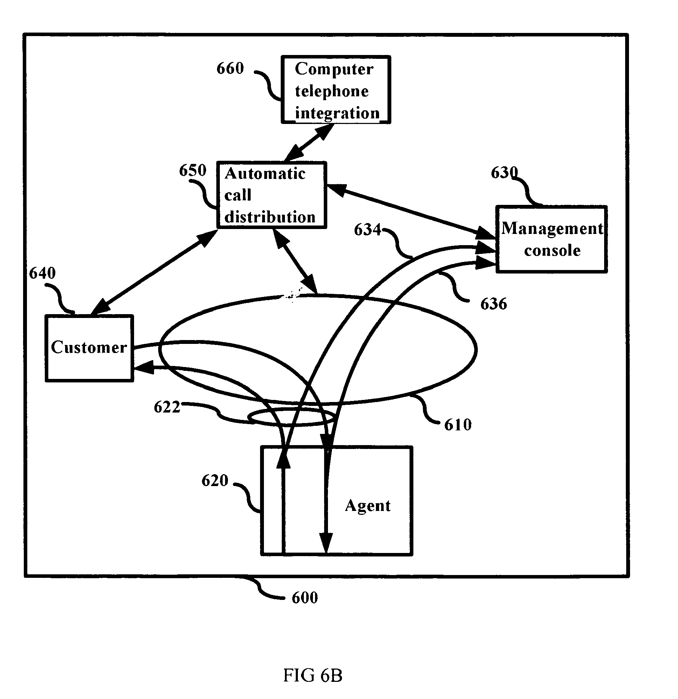

FIG. 6B is a diagram illustrating a call center 600 equipped with a broadband communications system according to another embodiment of the present invention. The call centers shown in FIG. 6B and FIG. 6A have the same components, except for the following two differences: The agent console 620 does not have a mixer 624, and two unidirectional communication channels 634 and 636 replace the unidirectional communication channel 632.

A communication session is established between an agent console 620 and a customer console 640 via an IP network 410, which provides a bidirectional communication channel 622. The management console 630 sends the Soft ACD server 650 a session setup command to initiate a monitoring session. After receiving the request, the Soft ACD server 650 sends a session setup command to the agent console 620 to establish a monitoring session. The command sent by the Soft ACD server 650 carries a predetermined tag indicating that a request for a monitoring session is issued.

The agent console 620 receives and recognizes the session setup command, and sends the data streams to the management console 630 via two unidirectional communication channels 634 and 636. The unidirectional communication channel 634 carries a copy of the data streams sent from the agent console to the customer console, and the unidirectional communication channel 636 carries a copy of the data streams sent from the customer console to the agent console. The management console 630 receives the data streams via the two unidirectional communication channels and monitors the conversation between the agent and the customer. The same system can be used to record the communication session by simply routing the data streams to a recording device.

The above illustration provides many different embodiments or embodiments for implementing different features of the invention. Specific embodiments of components and processes are described to help clarify the invention. These are, of course, merely exemplary embodiments and are not intended to limit the invention from that described in the claims

Although the invention is illustrated and described herein as embodied in one or more specific examples, it is nevertheless not intended to be limited to the details shown.

## Claims

1. A system for monitoring suitable for a call center, wherein the system comprises:
a call control server(650,660);
a management console(630); and
an agent console(620),
wherein the management console (630) is adapted to send the call control server (650,660) a first request, carrying a predetermined tag, to initiate a monitoring session to trigger the call control server(650,660);
the call control server (650,660) is adapted to send the agent console (620) a second request, carrying the predetermined tag, to establish the monitoring session with the management console (630), wherein the predetermined tag is used to instruct the agent console (620) to set up the monitoring session with the management console (630), wherein the monitoring session is set up without being detected by an operating agent;
the agent console(620) is adapted to exchange data streams with a customer after receiving the second request, and to forward, during the monitoring session, a copy of the data streams to the management console(630).

2. The system of claim 1, wherein the agent console (620) forwards the management console (630) with the copy of the data streams via a unidirectional channel during the monitoring session.

3. The system of claim 2, wherein the data streams include the data streams sent from a customer console (640) used by the customer to the agent console (620) and the data streams sent from the agent console (620) to the customer console (640).

4. The system of claim 3, wherein the copy of the data streams sent from the customer console (640) to the agent console (620) and the copy of the data streams sent from the agent console (620) to the customer console (640) are provided to the management console (630) via one unidirectional channel after being combined or via two unidirectional channels respectively.

5. A method for monitoring suitable for a call center, wherein the method comprises:
sending (420) a first request carrying a predetermined tag from a management console (630) to a call control server (650,660), to initiate a monitoring session;
sending (430) a second request from the call control server (650,660) to an agent console (620), to establish the monitoring session with the management console (630), wherein the second request carries the predetermined tag which is used to instruct the agent console (620) to set up the monitoring session with the management console (630), wherein the monitoring session is set up without being detected by an operating agent; and
exchanging (460), by the agent console (620), data streams with a customer after receiving the second request; and
forwarding (460) from the agent console (620) a copy of the data streams to the management console(630).

6. The method of claim 5, wherein forwarding the data streams from the agent console (620) to the management console (630) is completed via a unidirectional channel during the monitoring session.

7. The method of claim 5, wherein the data streams include the data streams sent from a customer console (640) used by a customer to the agent console (620) and the data streams sent from the agent console (620) to the customer console (640).

8. The method of claim 7, wherein the copy of the data streams sent from the customer console (640) to the agent console (620) and the copy of the data streams sent from the agent console (620) to the customer console (640) are provided to the management console (630) via one unidirectional channel after being combined or via two unidirectional channels respectively.

9. The method of claim 5, wherein the call control server includes an Automatic Call Distribution and a Computer Telephone Integration Server.

## Patentansprüche

1. System zur Überwachung, das für ein Call-Center geeignet ist, wobei das System Folgendes umfasst:
einen Anrufsteuerserver (650, 660);
eine Verwaltungskonsole (630); und
eine Mitarbeiterkonsole (620),
wobei die Verwaltungskonsole (630) dafür ausgelegt ist, zu dem Anrufsteuerserver (650, 660) eine erste Anforderung zu senden, die ein vorbestimmtes Tag trägt, um eine Überwachungssitzung zum Triggern des Anrufsteuerservers (650, 660) einzuleiten;
der Anrufsteuerserver (650, 660) dafür ausgelegt ist, der Mitarbeiterkonsole (620) eine zweite Anforderung zu senden, die das vorbestimmte Tag trägt, um die Überwachungssitzung mit der Verwaltungskonsole (630) herzustellen, wobei das vorbestimmte Tag verwendet wird, um die Mitarbeiterkonsole (620) anzuweisen, die Überwachungssitzung mit der Verwaltungskonsole (630) aufzubauen, wobei die Überwachungssitzung aufgebaut wird, ohne durch einen arbeitenden Mitarbeiter detektiert zu werden;
die Mitarbeiterkonsole (620) dafür ausgelegt ist, nach dem Empfang der zweiten Anforderung Datenströme mit einem Kunden auszutauschen und während der Überwachungssitzung eine Kopie der Datenströme zu der Verwaltungskonsole (630) weiterzuleiten.

2. System nach Anspruch 1, wobei die Mitarbeiterkonsole (620) an die Verwaltungskonsole (630) die Kopie der Datenströme über einen unidirektionalen Kanal während der Überwachungssitzung weiterleitet.

3. System nach Anspruch 2, wobei die Datenströme Folgendes umfassen:
die Datenströme, die von einer von dem Kunden benutzten Kundenkonsole (640) zu der Mitarbeiterkonsole (620) gesendet werden, und die Datenströme, die von der Mitarbeiterkonsole (620) zu der Kundenkonsole (640) gesendet werden.

4. System nach Anspruch 3, wobei die Kopie der von der Kundenkonsole (640) zu der Mitarbeiterkonsole (620) gesendeten Datenströme und die Kopie der von der Mitarbeiterkonsole (620) zu der Kundenkonsole (640) gesendeten Datenströme der Verwaltungskonsole (630) über einen unidirektionalen Kanal, nachdem sie kombiniert wurden, oder über jeweils zwei unidirektionale Kanäle zugeführt werden.

5. Verfahren zur Überwachung, das für ein Call-Center geeignet ist, wobei das Verfahren die folgenden Schritte umfasst:
Senden (420) einer ersten Anforderung, die ein vorbestimmtes Tag trägt, von einer Verwaltungskonsole (630) zu einem Anrufsteuerserver (650, 660), um eine Überwachungssitzung einzuleiten;
Senden (430) einer zweiten Anforderung von dem Anrufsteuerserver (650, 660) zu einer Mitarbeiterkonsole (620), um die Überwachungssitzung mit der Verwaltungskonsole (630) herzustellen, wobei die zweite Anforderung das vorbestimmte Tag trägt,
das verwendet wird, um die Mitarbeiterkonsole (620) anzuweisen, die Überwachungssitzung mit der Verwaltungskonsole (630) aufzubauen, wobei die Überwachungssitzung aufgebaut wird, ohne durch einen arbeitenden Mitarbeiter detektiert zu werden;
und
Austauschen (460) von Datenströmen mit einem Kunden, nachdem die zweite Anforderung empfangen wird, durch die Mitarbeiterkonsole (620); und
Weiterleiten (460) einer Kopie der Datenströme von der Mitarbeiterkonsole (620) zu der Verwaltungskonsole (630).

6. Verfahren nach Anspruch 5, wobei das Weiterleiten der Datenströme von der Mitarbeiterkonsole (620) zu der Verwaltungskonsole (630) über einen unidirektionalen Kanal während der Überwachungssitzung abgeschlossen wird.

7. Verfahren nach Anspruch 5, wobei die Datenströme Folgendes umfassen: die Datenströme, die von einer von einem Kunden verwendeten Kundenkonsole (640) zu der Mitarbeiterkonsole (620) gesendet werden, und die Datenströme, die von der Mitarbeiterkonsole (620) zu der Kundenkonsole (640) gesendet werden.

8. Verfahren nach Anspruch 7, wobei die Kopie der von der Kundenkonsole (640) zu der Mitarbeiterkonsole (620) gesendeten Datenströme und die Kopie der von der Mitarbeiterkonsole (620) zu der Kundenkonsole (640) gesendeten Datenströme der Verwaltungskonsole (630) über einen unidirektionalen Kanal, nachdem sie kombiniert wurden, oder über jeweils zwei unidirektionale Kanäle zugeführt werden.

9. Verfahren nach Anspruch 5, wobei der Anrufsteuerserver einen Server für Automatic Call Distribution und einen Server für Computer Telephone Integration umfasst.

## Revendications

1. Système de surveillance pour centre d'appels, le système comprenant :
un serveur de contrôle d'appels (650, 660) ;
une console de gestion (630) ; et
une console d'agent (620),
dans lequel la console de gestion (630) est adaptée pour envoyer au serveur de contrôle d'appels (650, 660) une première requête, portant une balise prédéterminée, pour lancer une session de surveillance et déclencher le serveur de contrôle d'appels (650, 660) ;
le serveur de contrôle d'appels (650, 660) est adapté pour envoyer à la console d'agent (620) une seconde requête, portant la balise prédéterminée, pour établir la session de surveillance avec la console de gestion (630), dans lequel la balise prédéterminée sert à donner l'instruction à la console d'agent (620) d'établir la session de surveillance avec la console de gestion (630), la session de surveillance étant établie sans être détectée par un agent opérationnel ;
la console d'agent (620) est adaptée pour échanger des trains de données avec un client après avoir reçu la seconde requête, et pour transmettre, durant la session de surveillance, une copie des trains de données à la console de gestion (630).

2. Système selon la revendication 1, dans lequel la console d'agent (620) transmet à la console de gestion (630) la copie des trains de données par l'intermédiaire d'un canal unidirectionnel durant la session de surveillance.

3. Système selon la revendication 2, dans lequel les trains de données comportent les trains de données envoyés par une console client (640) utilisée par le client à la console d'agent (620) et les trains de données envoyés par la console d'agent (620) à la console client (640).

4. Système selon la revendication 3, dans lequel la copie des trains de données envoyés par la console client (640) à la console d'agent (620) et la copie des trains de données envoyés par la console d'agent (620) à la console client (640) sont fournies à la console de gestion (630) par l'intermédiaire d'un canal unidirectionnel après avoir été combinées ou par l'intermédiaire de deux canaux unidirectionnels respectivement.

5. Procédé de surveillance pour centre d'appels, le procédé comprenant :
l'envoi (420) d'une première requête portant une balise prédéterminée par une console de gestion (630) à un serveur de contrôle d'appels (650, 660), pour lancer une session de surveillance ;
l'envoi (430) d'une seconde requête par le serveur de contrôle d'appels (650, 660) à une console d'agent (620), pour établir la session de surveillance avec la console de gestion (630), la seconde requête portant la balise prédéterminée qui sert à donner l'instruction à la console d'agent (620) d'établir la session de surveillance avec la console de gestion (630), la session de surveillance étant établie sans être détectée par un agent opérationnel ; et
l'échange (460), par la console d'agent (620), de trains de données avec un client après avoir reçu la seconde requête ; et
la transmission (460) par la console d'agent (620) d'une copie des trains de données à la console de gestion (630).

6. Procédé selon la revendication 5, dans lequel la transmission des trains de données depuis la console d'agent (620) jusqu'à la console de gestion (630) s'effectue par l'intermédiaire d'un canal unidirectionnel durant la session de surveillance.

7. Procédé selon la revendication 5, dans lequel les trains de données comportent les trains de données envoyés par une console client (640) utilisée par un client à la console d'agent (620) et les trains de données envoyés par la console d'agent (620) à la console client (640).

8. Procédé selon la revendication 7, dans lequel la copie des trains de données envoyés par la console client (640) à la console d'agent (620) et la copie des trains de données envoyés par la console d'agent (620) à la console client (640) sont fournies à la console de gestion (630) par l'intermédiaire d'un canal unidirectionnel après avoir été combinées ou par l'intermédiaire de deux canaux unidirectionnels respectivement.

9. Procédé selon la revendication 5, dans lequel le serveur de contrôle d'appels comporte un Serveur à Distribution d'Appels Automatique et un Serveur à Couplage Téléphonie Informatique.
